(19) Europäisches Patentamt

European Patent Office

Office européen des brevets

(11) **EP 0 905 677 B1**

(12) **FASCICULE DE BREVET EUROPEEN**

(45) Date de publication et mention
de la délivrance du brevet:
**05.11.2003 Bulletin 2003/45**

(51) Int Cl.⁷: **G10L 15/22**

(21) Numéro de dépôt: 98402370.5

(22) Date de dépôt: **25.09.1998**

(54) **Procédé de reconnaissance de parole**

Verfahren zur Spracherkennung

Speech recognition method

(84) Etats contractants désignés:
**AT BE CH DE DK ES GB GR IT LI NL PT SE**

(30) Priorité: **29.09.1997 FR 9712087**

(43) Date de publication de la demande:
**31.03.1999 Bulletin 1999/13**

(73) Titulaire: **NORTEL NETWORKS France
78117 Châteaufort (FR)**

(72) Inventeurs:
 • **Glorion, Catherine
 78210 Saint Cyr l'Ecole (FR)**
 • **Lelièvre, Laurent
 78760 Jouars Pontchartrain (FR)**
 • **Lockwood, Philip
 95490 Vauréal (FR)**

(74) Mandataire: **Loisel, Bertrand
Cabinet Plasseraud,
84, rue d'Amsterdam
75440 Paris Cédex 09 (FR)**

(56) Documents cités:
 **EP-A- 0 573 301          EP-A- 0 651 372**

 • **MAZOR B ET AL: "THE DESIGN OF
 SPEECH-INTERACTIVE DIALOGS FOR
 TRANSACTION -AUTOMATIONSYSTEMS"
 SPEECH COMMUNICATION, vol. 17, no. 3/04,
 novembre 1995, pages 313-320, XP000641899**
 • **"METHOD FOR CONSTRUCTING ALTERNATE
 WORD LISTS" IBM TECHNICAL DISCLOSURE
 BULLETIN, vol. 34, no. 12, 1 mai 1992, pages
 355-356, XP000308547**

**Description**

La présente invention concerne le domaine de la reconnaissance automatique de la parole.

Un système de reconnaissance de parole comprend deux principales unités fonctionnelles : une unité de paramétrisation et une unité de reconnaissance. Il s'y ajoute fréquemment une unité d'apprentissage servant à construire le dictionnaire de références utilisé par l'unité de reconnaissance.

L'unité de paramétrisation calcule des paramètres pertinents à partir de signaux de parole captés par un microphone. Ces calculs sont effectués conformément à une représentation paramétrique choisie pour différencier au mieux les formes vocales, en séparant l'information sémantique contenue dans la parole de l'information esthétique propre à l'élocution. Une classe importante de telles représentations est constituée par les représentations cepstrales (voir EP-A-0 621 582).

L'unité de reconnaissance réalise l'association entre un segment de parole observé, représenté par les paramètres calculés par l'unité de paramétrisation, et une référence pour laquelle un autre jeu de paramètres est stocké dans un dictionnaire de références. Les jeux de paramètres stockés dans le dictionnaire en association avec les différentes références peuvent définir des modèles, déterministes (ils sont par exemple composés directement de vecteurs issus de l'unité de paramétrisation). Mais le plus souvent, pour tenir compte des variabilités de la production de la parole et de l'environnement acoustique, on utilise plutôt des jeux de paramètres caractérisants des modèles stochastiques. Une classe importante de tels modèles est constituée par les modèles de Markov cachés. Ces modèles stochastiques permettent, par une recherche du maximum de vraisemblance, d'identifier le modèle qui rend compte au mieux de la séquence de paramètres observée, et de sélectionner la référence associée à ce modèle (voir L.R. RABINER : "A Tutorial on Hidden Markov Models and Selected Applications in Speech Recognition", Proceedings of the IEEE, Vol. 77, No. 2, février 1989, pages 257-285).

En général, la reconnaissance d'un mot ou d'un segment de parole ne se limite pas à une recherche du maximum de vraisemblance. Un ou plusieurs autres critères de vraisemblance sont examinés pour déterminer si le modèle optimal, présentant le maximum de vraisemblance, doit effectivement être sélectionné. Ce critère est par exemple que la vraisemblance maximisée dépasse un certain seuil. Si le critère est vérifié, le modèle optimal est sélectionné et l'unité de reconnaissance fournit un résultat.

Sinon, plusieurs solutions peuvent être utilisées : une première solution est de demander au locuteur une confirmation que le segment de parole prononcé correspond à la référence associée au modèle optimal, ou à l'une des références associées aux $n$ modèles pour lesquels les vraisemblances sont les plus grandes (voir EP-A-0 651 372). L'utilisateur doit alors effectuer des manipulations spéciales pour valider son choix, ce qui n'est pas ergonomique, surtout pour des applications en mode mains libres.

Une autre solution est de demander au locuteur une répétition de ce qu'il vient de prononcer. Si le critère de vraisemblance est vérifié par le modèle optimal proposé comme résultat du test de reconnaissance effectué sur cette répétition, la reconnaissance aboutit. Dans le cas contraire, une autre répétition est demandée, etc. Cette seconde solution n'est pas bien adaptée aux environnements bruités ou perturbés par des locuteurs multiples : le bruit perturbant la première prononciation et provoquant la non-vérification du critère de vraisemblance perturbera souvent la répétition, provoquant ainsi une autre non-vérification du critère, de sorte que l'utilisateur se trouve amené à répéter plusieurs fois le même mot sans succès. Si on cherche à pallier cet inconvénient en adoptant un critère de vraisemblance moins sévère, le système tend à effectuer de nombreux faux déclenchements dans les environnements bruités.

EP-A-0 573 301 décrit un procédé dans lequel, pour établir le classement sur lequel la reconnaissance est fondée, la probabilité a priori de prononciation d'un mot associé à une référence est remplacée, après la répétition par le locuteur, par la probabilité conditionnelle de prononciation de ce mot sachant que le même mot a été prononcé les deux fois. La probabilité conditionnelle est calculée à l'aide d'un développement selon la formule de Bayes. Ce procédé cherche ainsi à affiner les valeurs absolues des scores de reconnaissance de différentes entrées du dictionnaire de références.

Un but de la présente invention est de proposer une solution efficace pour reconnaître la parole dans des cas ambigus.

L'invention propose ainsi un procédé de reconnaissance de parole mettant en oeuvre des tests de reconnaissance, chaque test de reconnaissance faisant correspondre un segment de parole fourni au système avec au moins un jeu de paramètres mémorisé dans un dictionnaire de références. Le procédé comprend les étapes suivantes :

- appliquer le test de reconnaissance à un segment de parole prononcé par un locuteur ;

- examiner si un premier jeu de paramètres optimal, avec lequel le test de reconnaissance a fait correspondre le segment de parole prononcé, satisfait un critère de vraisemblance ;

- si le critère de vraisemblance est satisfait par le premier jeu de paramètres optimal, sélectionner le premier jeu de paramètres optimal ;

- si le critère de vraisemblance n'est pas satisfait par le premier jeu de paramètres optimal, requérir du locuteur la répétition du segment de parole ;

- appliquer le test de reconnaissance au segment de parole répété par le locuteur ;

- examiner si un second jeu de paramètres optimal, avec lequel le test de reconnaissance a fait correspondre le segment de parole répété, satisfait le critère de vraisemblance ;
- si le critère de vraisemblance est satisfait par le second jeu de paramètres optimal, sélectionner le second jeu de paramètres optimal ;
- si le critère de vraisemblance n'est pas satisfait par le second jeu de paramètres optimal et si une combinaison des résultats des deux tests de reconnaissance satisfait au moins un critère de sélection combinée, sélectionner un des jeux de paramètres que les deux tests de reconnaissance ont fait correspondre au segment de parole prononcé et au segment de parole répété.

Bien que les critères de vraisemblance, appliqués séparément à deux observations d'un même mot ou segment de parole, puissent être insuffisants pour que la reconnaissance soit concluante, on pourra souvent prendre une décision adéquate en combinant ces deux observations et en examinant d'autres critères relatifs à la combinaison. L'invention en tire parti pour améliorer le taux de reconnaissance pour une probabilité de faux déclenchement donnée, ou pour diminuer la probabilité de faux déclenchement pour un taux de reconnaissance donné.

Dans un mode de réalisation typique, chaque test de reconnaissance fournit une liste de $n \geq 1$ jeux de paramètres du dictionnaire, qui présentent les vraisemblances les plus grandes compte tenu de l'observation du segment de parole soumis au test, cette liste étant ordonnée selon les vraisemblances décroissantes. Lesdits premier et second jeux de paramètres optimaux sont alors chacun en tête de liste.

Les critères de sélection combinée utilisables peuvent comprendre :

- l'identité des premier et second jeux de paramètres optimaux,
- lorsque le dictionnaire contient au moins un jeu de paramètres de rejet, avec $n \geq 2$, le fait qu'un même jeu de paramètres, autre qu'un jeu de paramètres de rejet, figure d'une part en tête de la liste fournie par l'un des deux tests de reconnaissance, et d'autre part en seconde position, après un jeu de paramètres de rejet, dans la liste fournie par l'autre des deux tests de reconnaissance.

En appliquant de tels critères, on tire parti du fait que les classements fournis par les tests de reconnaissance individuels sont relativement fiables. Les critères ci-dessus sont fondés sur ces classements plutôt que sur les valeurs absolues des scores dont l'affinement, à l'aide de la formule de Bayes ou d'une autre formule de pondération, ne fournit pas nécessairement une reconnaissance plus fréquente, particulièrement dans les environnements bruités.

D'autres particularités et avantages de la présente invention apparaîtront dans la description ci-après d'exemples de réalisation non limitatifs, en référence aux dessins annexés, dans lesquels :

- la figure 1 est un schéma synoptique d'un système de reconnaissance mettant en oeuvre la présente invention ; et
- les figures 2 et 3 sont des diagrammes illustrant des critères de sélection combinée pouvant être examinés dans le système de la figure 1.

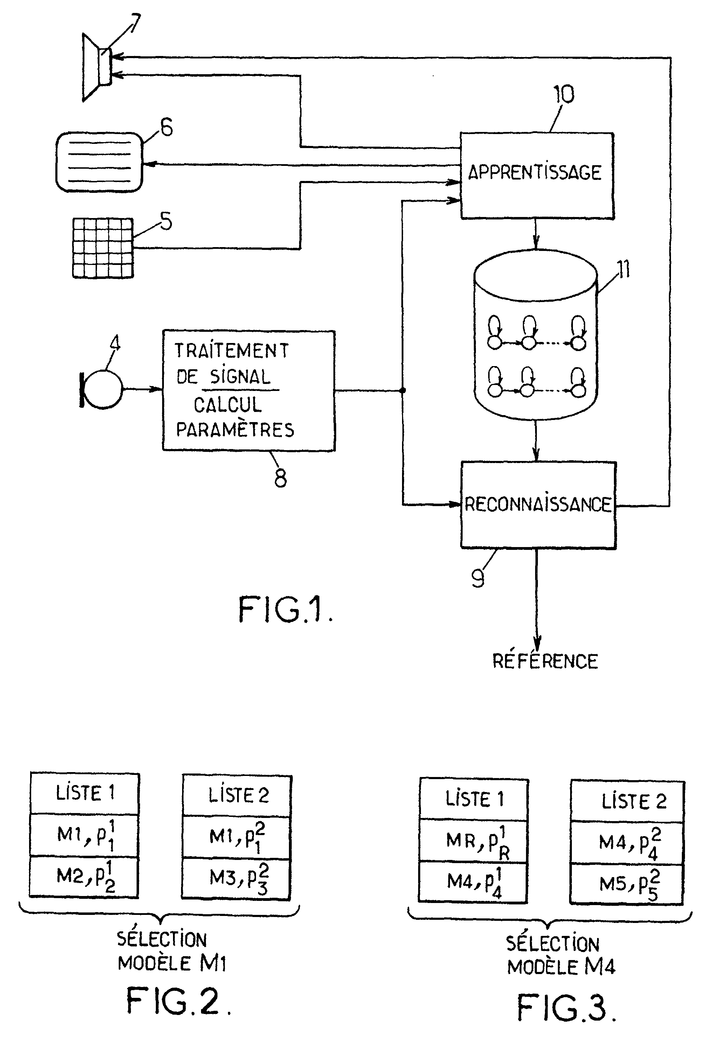

Le système de reconnaissance de parole représenté sur la figure 1 a une interface utilisateur constituée par un microphone 4, un clavier 5, un écran d'affichage 6 et un haut-parleur 7.

Les signaux acoustiques délivrés par le microphone 4 sont fournis à une unité 8 de traitement de signal qui fournit les paramètres pertinents à l'unité de reconnaissance 9 et à l'unité d'apprentissage 10.

Le clavier 5, l'écran 6 et le haut-parleur 7 servent notamment au dialogue entre l'utilisateur et les unités 9, 10 de reconnaissance et d'apprentissage.

Le système de reconnaissance comprend encore une mémoire 11 constituant un dictionnaire de références. Dans ce dictionnaire, l'unité d'apprentissage 10 enregistre des modèles en association avec des références. En phase de reconnaissance, l'unité 9 analyse les paramètres fournis par l'unité 8 et leur fait correspondre un modèle, c'est-à-dire un jeu de paramètres mémorisés dans le dictionnaire 11, et délivre la référence associée en tant que sortie du système de reconnaissance. Cette référence peut alors être utilisée par l'équipement dont fait partie le système de reconnaissance.

A titre d'exemple illustratif, cet équipement peut être un terminal téléphonique de type mains-libres dans lequel le système de reconnaissance est utilisé pour commander des fonctions telles que la numérotation automatique, en réponse à des noms de correspondants et/ou à des mots de commande prononcés par l'utilisateur. Le microphone 4, le clavier 5, l'écran 6 et le haut-parleur 7 peuvent être ceux que le terminal téléphonique comporte par ailleurs.

Divers types de paramètres représentatifs des structures vocales, calculés par l'unité 8, peuvent être utilisés dans le cadre de la présente invention. A titre d'exemple, ils peuvent être des coefficients cepstraux en racine. Pour des explications détaillées sur ce type de représentation, il est fait référence à la demande de brevet européen 0 621 582. L'unité 8 de traitement de signal peut ainsi effectuer les opérations suivantes :

- numérisation du signal fourni par le microphone 4 ;
- division du signal numérique en trames successives, par exemple de durée 16 ms ;
- détection d'activité vocale pour distinguer les trames de parole des trames de signal ne comportant que du bruit ;

- transformée de Fourier de chaque trame de parole pour obtenir un spectre X($\omega$), éventuellement soumis à un débruitage par soustraction spectrale d'estimations du bruit (voir EP-A-0 534 837) ;
- application d'une fonction de compression en racine (ou d'une fonction puissance) pour calculer les $|X(\omega)|^\gamma$, où $\gamma$ représente un exposant, fixe ou adaptatif, compris entre 0 et 2 (on peut également utiliser une fonction de compression logarithmique) ;
- transformation de Fourier inverse des quantités $|X(\omega)|^\gamma$ pour obtenir des coefficients dits cepstraux, formant un vecteur de p coefficients (par exemple p≈20). Ce vecteur cepstral est fourni par l'unité 8 relativement à la trame en question.

Chaque séquence de trames consécutives détectées comme supportant une activité vocale correspond normalement à un segment de parole prononcé par un locuteur. Pour chacun de ces segments, l'unité 8 délivre une séquence de vecteurs cepstraux que peuvent traiter les unités 9 et 10.

Dans l'exemple de réalisation décrit ici, chaque référence du dictionnaire 11 est associée à un modèle de Markov caché caractérisé par un nombre d'états et, pour chaque état, par une loi de densité de probabilité d'observation des vecteurs cepstraux. Ces lois sont par exemple des lois gaussiennes de dimension p. Elles sont alors définies chacune par une moyenne (vecteur) et par une variance (matrice).

La phase d'apprentissage consiste à calculer les paramètres des lois de probabilité associées aux modèles de Markov cachés. Pour chaque référence à mémoriser, l'utilisateur est invité à prononcer plusieurs fois le mot associé afin de fournir à l'unité 10 une statistique d'observation suffisante pour lui permettre d'évaluer de façon fiable les paramètres des lois de probabilité relatives aux différents états du modèle.

Les méthodes utilisées pour procéder à ces estimations sont classiques. On pourra à cet égard se référer à l'article précité de L.R. RABINER.

On notera d'ailleurs que le procédé de reconnaissance selon l'invention est applicable à des systèmes qui ne sont pas à apprentissage.

Certains des modèles contenus dans le dictionnaire 11 sont des modèles de rejet artificiellement construits pour être préférentiellement retenus par l'unité 9 lorsque le segment de parole soumis au test de reconnaissance ne correspond à aucun des mots référencés dans le dictionnaire.

Un test de reconnaissance effectué par l'unité 9, sur la base d'une séquence de vecteurs cepstraux obtenus à partir d'un segment de parole traité par l'unité 8, consiste à identifier celui ou ceux des modèles du dictionnaire de référence 11 qui maximise(nt) la vraisemblance de l'observation de ladite séquence de vecteurs cepstraux. Un moyen classique pour effectuer cette identification est d'utiliser l'algorithme de Viterbi. Pour différents modèles du dictionnaire, un treillis de Viterbi permet de déterminer la séquence d'état qui maximise la probabilité d'observation de la séquence de vecteurs cepstraux. Le modèle optimal, pour lequel la probabilité maximisée est la plus grande, est identifié ainsi qu'éventuellement quelques autres modèles pour lesquels la probabilité maximisée est relativement importante. On considère ici le cas où le test de reconnaissance fournit, pour chaque segment de parole traité, une liste de n modèles classés dans l'ordre des vraisemblances décroissantes ($n \geq 1$). Le test fournit ainsi un modèle optimal (tête de liste) et n-1 autres modèles candidats.

Le test de reconnaissance est complété par l'examen d'un critère de vraisemblance pour décider si le modèle figurant en tête de liste doit ou non être reconnu comme correspondant à ce qu'a prononcé le locuteur. Dans l'affirmative, la référence associée à ce modèle est produite en tant que sortie de l'unité de reconnaissance 9.

Divers types de critères de vraisemblance peuvent être utilisés. C'est par exemple le fait que la probabilité $p_{max}$ maximisée pour le modèle optimal dépasse un seuil prédéterminé $S$. Ce seuil peut être absolu ; il faut alors avoir $p_{max} > S$. Il peut encore être exprimé relativement à la probabilité $p'_{max}$ maximisée pour le modèle apparaissant en seconde position dans la liste ; il faut alors avoir $p_{max} > S \times p'_{max}$. Le critère de vraisemblance peut également combiner plusieurs sous-critères de seuillage.

Si le critère de vraisemblance n'est pas vérifié, le test de reconnaissance effectué sur la prononciation du segment de parole ne suffit pas pour que l'unité 9 prenne sa décision.

Dans ce cas, l'unité 9 requiert de l'utilisateur qu'il répète le mot précédemment prononcé, par exemple en commandant l'affichage d'un message sur l'écran 6 et/ou l'émission d'un signal sonore par le haut-parleur 7. Une fois que l'utilisateur a déféré à cette invitation, un nouveau test de reconnaissance est effectué.

Si ce nouveau test de reconnaissance est concluant (le critère de vraisemblance est vérifié), le modèle optimal fourni par ce nouveau test de reconnaissance est sélectionné, et la référence associée est délivrée par l'unité 9.

Si le critère de vraisemblance n'est pas vérifié non plus par le modèle optimal fourni par le nouveau test de reconnaissance, il est néanmoins possible que l'unité 9 sélectionne un modèle et délivre la référence correspondante, après avoir combiné les résultats des tests de reconnaissance effectués sur la première prononciation du mot et sur sa répétition, et examiné un ou plusieurs autres critères de sélection portant sur cette combinaison.

Des exemples simples de tels critères de sélection combinée sont illustrés par les figures 2 et 3 dans le cas particulier où $n=2$. Sur ces figures, les notations $Mi$, $p_i^j$ font référence au modèle numéro $i$ pour lequel une vraisemblance $p_i^j$ a été calculée à l'issue de la j-ième prononciation du mot (j=1,2).

Un premier critère, illustré par la figure 2, est l'identité des modèles optimaux fournis par les deux tests de reconnaissance : si le même modèle *M1* apparaît en tête des listes fournies par les tests de reconnaissance appliqués à la première prononciation du mot et à sa répétition, mais en ne vérifiant aucune des deux fois le critère de vraisemblance ($p_1^1 < S$ et $p_1^2 < S$, ou $p_2^1 < S \times p_1^1$ et $p_1^2 < S \times p_3^2$), ce modèle pourra néanmoins être sélectionné par l'unité de reconnaissance 9. Il est en effet très peu probable que le même modèle apparaisse deux fois de suite comme optimal sans que le mot correspondant ait été prononcé.

Une variante de ce premier critère serait, lorsque le même modèle *M1* apparaît en tête des deux listes en ne vérifiant aucune des deux fois le critère de vraisemblance, de ne sélectionner ce modèle que si l'une et/ou l'autre des probabilités calculées $p_1^1$ et $p_1^2$ vérifient une autre condition, moins restrictive.

Un second critère de sélection combinée, illustré par la figure 3, est le fait que le même modèle de mot M4 figure d'une part en tête de la liste fournie par l'un des deux tests de reconnaissance, sans vérifier le critère de vraisemblance ($p_4^2 < S$, ou $p_4^2 < S \times p_5^2$), et d'autre part en seconde position, après un modèle de rejet *MR*, dans la liste fournie par l'autre des deux tests de reconnaissance.

On appréciera que de nombreux autres critères de sélection combinée pourraient être utilisés par l'unité de reconnaissance 9.

Le système de reconnaissance selon l'invention permet à l'utilisateur de répéter le mot prononcé sans avoir à effectuer de manipulation spéciale (appui de touche ou autre). Les performances du système en environnement bruité peuvent être améliorées grâce aux possibilités de sélection combinée. On peut adopter, pour les tests individuels, des critères de vraisemblance relativement plus sévères pour limiter les déclenchements sur du bruit de fond. Si néanmoins le système se déclenche sur un bruit parasite, l'utilisateur garde une possibilité de prononcer un mot sans avoir à réactiver le système par une manipulation spéciale.

## Revendications

1. Procédé de reconnaissance de parole mettant en oeuvre des tests de reconnaissance, chaque test de reconnaissance faisant correspondre un segment de parole fourni au système avec au moins un jeu de paramètres mémorisé dans un dictionnaire de références (11), le procédé comprenant les étapes suivantes :

   - appliquer le test de reconnaissance à un segment de parole prononcé par un locuteur ;
   - examiner si un premier jeu de paramètres optimal, avec lequel le test de reconnaissance a fait correspondre le segment de parole prononcé, satisfait un critère de vraisemblance ;
   - si le critère de vraisemblance est satisfait par le premier jeu de paramètres optimal, sélectionner le premier jeu de paramètres optimal ;
   - si le critère de vraisemblance n'est pas satisfait par le premier jeu de paramètres optimal, requérir du locuteur la répétition du segment de parole ;
   - appliquer le test de reconnaissance au segment de parole répété par le locuteur ;
   - examiner si un second jeu de paramètres optimal, avec lequel le test de reconnaissance a fait correspondre le segment de parole répété, satisfait le critère de vraisemblance ;
   - si le critère de vraisemblance est satisfait par le second jeu de paramètres optimal, sélectionner le second jeu de paramètres optimal ;
   - si le critère de vraisemblance n'est pas satisfait par le second jeu de paramètres optimal et si une combinaison des résultats des deux tests de reconnaissance satisfait au moins un critère de sélection combinée, sélectionner un des jeux de paramètres que les deux tests de reconnaissance ont fait correspondre au segment de parole prononcé et au segment de parole répété.

2. Procédé selon la revendication 1, dans lequel chaque test de reconnaissance fournit une liste de n jeux de paramètres du dictionnaire (11), qui présentent les vraisemblances les plus grandes compte tenu de l'observation du segment de parole soumis au test, n étant un nombre au moins égal à un, cette liste étant ordonnée selon les vraisemblances décroissantes, lesdits premier et second jeux de paramètres optimaux étant chacun en tête de liste.

3. Procédé selon la revendication 2, dans lequel un critère de sélection combinée comprend l'identité des premier et second jeux de paramètres optimaux (*M1*).

4. Procédé selon la revendication 2 ou 3, dans lequel le dictionnaire (11) contient au moins un jeu de paramètres de rejet, dans lequel n≥2, et dans lequel un critère de sélection combinée comprend le fait qu'un même jeu de paramètres (*M4*), autre qu'un jeu de paramètres de rejet, figure d'une part en tête de la liste fournie par l'un des deux tests de reconnaissance, et d'autre part en seconde position, après un jeu de paramètres de rejet (*MR*), dans la liste fournie par l'autre des deux tests de reconnaissance.

5. Procédé d'apprentissage selon l'une quelconque des revendications précédentes, dans lequel, les jeux de paramètres mémorisés dans le dictionnaire de références (11) définissent des modèles de Markov cachés.

**Patentansprüche**

1. Verfahren zur Spracherkennung, bei dem Erkennungstests eingesetzt werden, wobei jeder Erkennungstest ein Sprachsegment, das dem System geliefert wurde, mit mindestens einem Satz von Parametern vergleicht, der in einem Referenzwörterbuch (11) gespeichert ist, wobei das Verfahren folgende Schritte umfasst:

   - Anwendung des Erkennungstests auf ein von einem Sprecher ausgesprochenes Sprachsegment;
   - Prüfung, ob ein erster optimaler Satz von Parametern, mit dem der Erkennungstest das ausgesprochene Sprachsegment verglichen hat, einem Wahrscheinlichkeitskriterium entspricht;
   - wenn das Wahrscheinlichkeitskriterium durch den ersten optimalen Parametersatz erfüllt wird, Auswahl des ersten optimalen Parametersatzes;
   - wenn das Wahrscheinlichkeitskriterium nicht durch den ersten optimalen Parametersatz erfüllt wird, Aufforderung an den Sprecher, das Sprachsegment zu wiederholen;
   - Anwendung des Erkennungstests auf das von dem Sprecher wiederholte Sprachsegment;
   - Prüfung, ob ein zweiter optimaler Parametersatz, mit dem der Erkennungstest das wiederholte Sprachsegment verglichen hat, dem Wahrscheinlichkeitskriterium entspricht;
   - wenn das Wahrscheinlichkeitskriterium durch den zweiten optimalen Parametersatz erfüllt wird, Auswahl des zweiten optimalen Parametersatzes;
   - wenn das Wahrscheinlichkeitskriterium nicht durch den zweiten optimalen Parametersatz erfüllt wird und wenn eine Kombinaton aus den Ergebnissen der beiden Erkennungstests mindestens einem Kriterium einer kombinierten Auswahl entspricht, Auswahl eines der beiden Parametersätze, die die beiden Erkennungstests dem ausgesprochenen und wiederholten Sprachsegment zugeordnet haben.

2. Verfahren nach Anspruch 1, bei dem jeder Erkennungstest eine Liste von n Parametersätzen des Wörterbuchs (11) liefert, die in Anbetracht der Prüfung des dem Test unterzogenen Sprachsegments die größten Wahrscheinlichkeiten aufweisen, wobei n eine Zahl mindestens gleich eins ist und wobei diese Liste entsprechend den abnehmenden Wahrscheinlichkeiten geordnet ist, wobei der erste und zweite optimale Parametersatz jeweils am Anfang der Liste stehen.

3. Verfahren nach Anspruch 2, bei dem ein Kriterium einer kombinierten Auswahl die Identität des ersten und zweiten optimalen Parametersatzes (*M1*) umfasst.

4. Verfahren nach Anspruch 2 oder 3, bei dem das Wörterbuch (11) mindestens einen Satz aus Ausschlussparametern enthält, bei dem n≥2, und bei dem das Kriterium der kombinierten Auswahl die Tatsache umfasst, dass ein und derselbe Parametersatz (*M4*), der kein Satz aus Ausschlussparametern ist, einerseits am Anfang der von einem der beiden Erkennungstests gelieferten Liste steht und andererseits an zweiter Stelle nach einem Satz aus Ausschlussparametern *(MR)* in der von dem anderen der beiden Erkennungstests gelieferten Liste steht.

5. Verfahren nach einem der vorstehenden Ansprüche, bei dem die in dem Referenzwörterbuch (11) gespeicherten Parametersätze versteckte Markov-Modelle bilden.

**Claims**

1. Method of speech recognition implementing recognition tests, wherein each recognition test matches a segment of speech provided to the system with at least one set of parameters memorised in a dictionary of references (11), the method comprising the steps of:

   - applying the recognition test to a segment of speech uttered by a speaker;
   - examining whether a first optimum set of parameters, with which the recognition test has matched the spoken segment of speech, satisfies a criterion of likelihood;
   - if the criterion of likelihood is satisfied by the first optimum set of parameters, selecting the first optimum set of parameters;
   - if the criterion of likelihood is not satisfied by the first optimum set of parameters, requesting the speaker to repeat the speech segment;
   - applying the recognition test to the segment of speech repeated by the speaker;
   - examining whether a second optimum set of parameters, with which the recognition test has matched the repeated segment of speech, satisfies the criterion of likelihood;
   - if the criterion of likelihood is satisfied by the second optimum set of parameters, selecting the second optimum set of parameters;
   - if the criterion of likelihood is not satisfied by the second optimum set of parameters and if a combination of the results of the two recognition tests satisfies at least one criterion of combined selection, selecting one of the sets of parameters which the two recognition tests have matched with the spoken segment of speech and with the repeated segment of speech.

2. Method according to claim 1, wherein each recognition test provides a list of n sets of parameters of the dictionary (11), which present the greatest likelihoods taking into account the observation of the speech segment submitted to the test, n being a number at least equal to one, said list being ranked according to decreasing likelihood, each of said first and second optimum sets of parameters being a head of list.

3. Method according to claim 2, wherein a criterion of combined selection comprises the identity of the first and second optimum sets of parameters ($M1$).

4. Method according to claim 2 or 3, wherein the dictionary (11) contains at least one set of rejection parameters, wherein n≥2, and wherein a criterion of combined selection includes the fact that a same set of parameters ($M4$), other than a set of rejection parameters, appears on the one hand at the head of the list provided by one of the two recognition tests, and on the other hand in second position, after a set of rejection parameters ($MR$), in the list provided by the other of the two recognition tests.

5. Method according to any one of the preceding claims, wherein the sets of parameters memorised in the dictionary of references (11) define hidden Markov models.

FIG.1.

SÉLECTION
MODÈLE M1

FIG.2.

SÉLECTION
MODÈLE M4

FIG.3.